# EUROPEAN PATENT APPLICATION

(11) **EP 3 761 301 A1**
(43) Date of publication of application: **06.01.2021**
(21) Application number: 19781191.2
(22) Date of filing: 12.02.2019
(51) Int. Cl.: G09G 5/00, B60K 35/00, B60R 11/02

(54) **DISPLAY CONTROL DEVICE, DISPLAY DEVICE FOR VEHICLE, DISPLAY CONTROL METHOD, AND PROGRAM**

(30) Priority: 06.04.2018 JP 2018073904
(71) Applicant: JVCKenwood Corporation, Yokohama-shi, Kanagawa 2210022 (JP)
(72) Inventor: OMURO, Tomonobu, Yokohama-shi, Kanagawa 221-0022 (JP)
(74) Representative: Wimmer, Hubert
(86) International application number: PCT/JP2019/004896
(87) International publication number: WO 2019/193839

(57) **Abstract**

Provided are a vehicle information acquisition section 42 that acquires vehicle-related information; a display control section 43 that implements control to generate and display, on a first display section 21 and a second display section 23 respectively, a video which includes information; and a driving mechanism control section 41 that implements control, of an open/close driving mechanism 30 that moves a display section unit 20 with respect to a viewer, to perform an operation to switch a display section facing the viewer according to a usage mode. When the driving mechanism control section 41 executes control to move the first display section 21 and the second display section 23 with respect to the viewer, the display control section 43 generates and displays video that is obtained by adjusting a frame rate for the first display section 21 and the second display section 23 respectively.

## Description

### Field

The present invention relates to a display control device, a vehicle display device, a display control method, and a program.

### Background

For example, display devices that are mounted in the instrument panels of moving bodies including vehicles display, in addition to vehicle state information required to pilot the moving body such as, for example, velocity or engine speed, additional information such as navigation information or audio information, for example. In this kind of display device, one central processing unit (CPU) centrally generates display-related video data and displays this data. Thus, the burden on the CPU is likely to be excessive. When the burden on the CPU becomes excessive, the stability of the display is likely to be impaired. Furthermore, when the display stability is impaired and vehicle state information is no longer displayed, the high level of safety of the moving body is likely to be impaired.

For a display system that is mounted in a moving body, technology with which the burden on the CPU is relieved by the generation of video data being shared by a plurality of processors (see Patent Literature 1, for example) is known.

### Citation List

### Patent Literature

Patent Document 1: Japanese Patent No. 4455594 Summary

### Technical Problem

However, when the processing is shared by a plurality of processors, costs increase according to the number of processors. Therefore, relieving the burden on the CPU, stabilizing the display, and further increasing the safety of the moving body, without increasing the number of processors, is desirable.

The present invention was conceived in view of the foregoing and an object thereof is to relieve the burden on the CPU, stabilize the display, and further increase the safety of the moving body.

### Solution to Problem

To solve the above problem, and achieve the above object, a display control device according to the present invention, comprising: a vehicle information acquisition section that acquires vehicle-related information; a display control section that implements control to generate and display, on a plurality of display sections respectively, a video that includes the information acquired by the vehicle information acquisition section; and a driving mechanism control section that controls a driving mechanism that moves the plurality of display sections with respect to a viewer, wherein, when the driving mechanism control section executes control to move the display sections with respect to the viewer, the display control section generates and displays video that is obtained by adjusting a frame rate for the plurality of display sections respectively.

A vehicle display device according to the present invention, comprising: the above display control device; and at least one of the plurality of display sections and the driving mechanism.

A display control method according to the present invention, comprising: a vehicle information acquisition step of acquiring vehicle-related information; a display control step of implementing control to generate and display, on a plurality of display sections respectively, a video that includes the information acquired by the vehicle information acquisition step; and a driving mechanism control step of controlling a driving mechanism that moves the plurality of display sections with respect to a viewer, wherein, when control to move the display sections with respect to the viewer is executed by the driving mechanism control step, the display control step generates and displays video that is obtained by adjusting a frame rate for the plurality of display sections respectively.

A program according to the present invention for causing a computer operating as a display control device to execute: a vehicle information acquisition step of acquiring vehicle-related information; a display control step of implementing control to generate and display, on a plurality of display sections respectively, a video that includes the information acquired by the vehicle information acquisition step; and a driving mechanism control step of controlling a driving mechanism that moves the plurality of display sections with respect to a viewer, wherein, when control to move the display sections with respect to the viewer is executed by the driving mechanism control step, the display control step generates and displays video that is obtained by adjusting a frame rate for the plurality of display sections respectively. Advantageous Effects of Invention

The present invention affords the advantageous effect of making it possible to relieve the burden on the CPU, stabilize the display, and further improve the safety of the moving body.

### Brief Description of Drawings

FIG. 1 is a block diagram illustrating a configuration example of a vehicle display device according to a first embodiment.
FIG. 2 is a schematic diagram illustrating an open state of a display section unit of the vehicle display device according to the first embodiment.
FIG. 3 is a schematic diagram illustrating a closed state of the display section unit of the vehicle display device according to the first embodiment.
FIG. 4 is a schematic diagram illustrating a state midway between open and closed of the display section unit of the vehicle display device according to the first embodiment.
FIG. 5 is a diagram illustrating an example of frame rates of a first display section and a second display section in each of the open/closed states of the display section unit.
FIG. 6 is a flowchart illustrating an example of processing of a vehicle display device according to the first embodiment.
FIG. 7 is a diagram illustrating an example of CPU usage ratios.
FIG. 8 is a diagram illustrating an example of frame rates of a first display section and a second display section according to a second embodiment.
FIG. 9 is a diagram illustrating another example of frame rates of the first display section and the second display section according to the second embodiment.
FIG. 10 is a schematic diagram illustrating a state midway between open and closed of the display section unit of the vehicle display device according to a third embodiment.
FIG. 11 is a flowchart illustrating an example of processing of a vehicle display device according to the third embodiment.

### Description of Embodiments

An embodiment, according to the present invention, of a control section (a display control device) 40, a vehicle display device 1, a display control method, and a program will be described in detail hereinbelow with reference to the accompanying drawings. Note that the present invention is not limited to or by the following embodiments.

In the description hereinbelow, each direction is defined in a state where the vehicle display device 1 is mounted in front of the driving seat of the vehicle. A front-back direction is a direction parallel to the direction of travel while the vehicle is driving straight, where a direction facing toward the driving seat side is the "front" of the front-back direction and a direction facing toward the front windshield side is the "back" of the front-back direction. The front-back direction is assumed to be the X axis direction. A left-right direction is a direction that is horizontally orthogonal to the front-back direction. The left side is "left", and the right side is "right", as seen from the driving seat side. The left-right direction is assumed to be the Y axis direction. An up-down direction is a direction that is orthogonal to the front-back direction and the left-right direction. The up-down direction is assumed to be the Z axis direction. Therefore, the front-back direction, left-right direction, and up-down direction are orthogonal to one another in three dimensions.

### [First Embodiment]

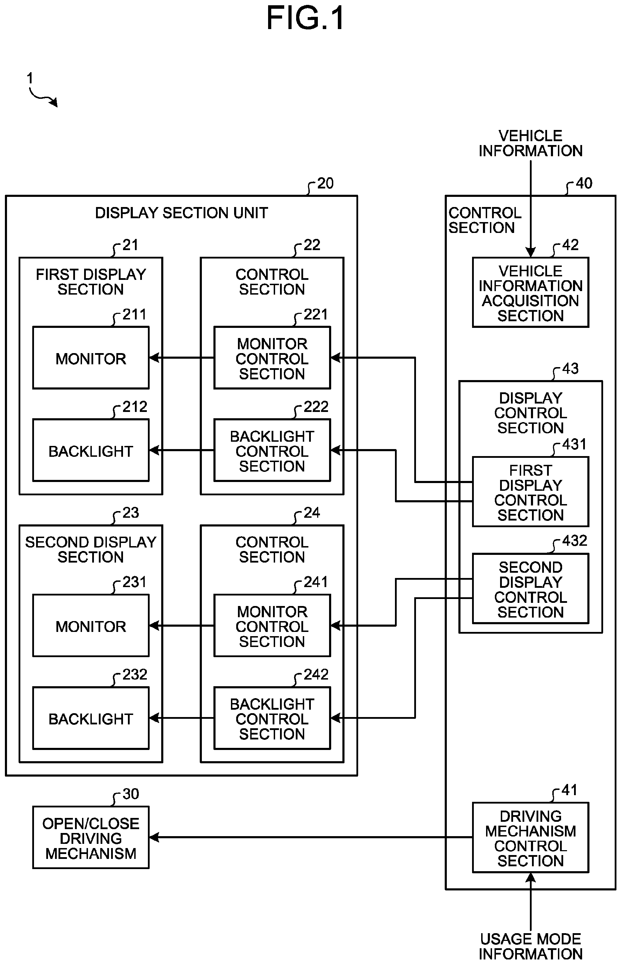

FIG. 1 is a block diagram illustrating a configuration example of a vehicle display device according to a first embodiment. The vehicle display device 1 is installed in an instrument panel. The vehicle display device 1 displays, in addition to vehicle state information (information) required to drive the vehicle such as, for example, the velocity or engine speed of the vehicle, additional information such as navigation information or audio information, for example. In the present embodiment, the vehicle display device 1 is described as being a device that displays vehicle state information.

The vehicle display device 1 has a display section unit 20, an open/close driving mechanism (a driving mechanism) 30, and a control section (a display control device) 40.

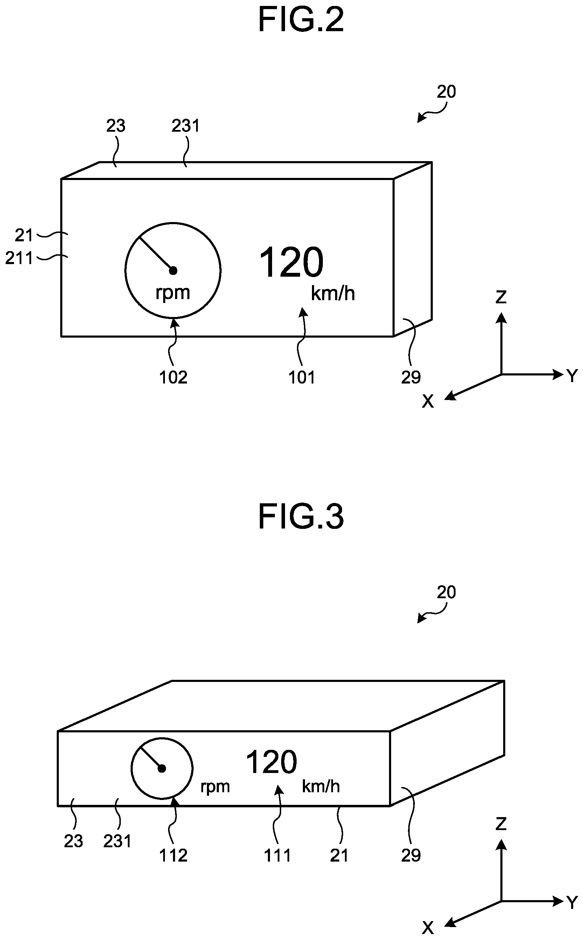

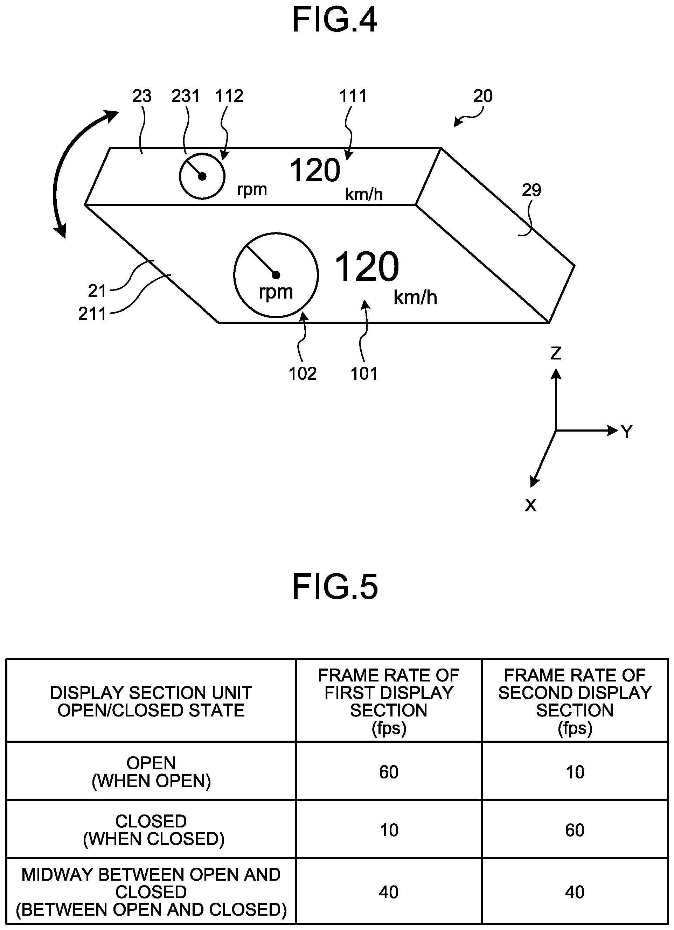

The display section unit 20 will now be described using FIGS. 2 to 4. The display section unit 20 displays vehicle state information. FIG. 2 is a schematic diagram illustrating an open state of a display section unit of the vehicle display device according to the first embodiment. FIG. 3 is a schematic diagram illustrating a closed state of the display section unit of the vehicle display device according to the first embodiment. FIG. 4 is a schematic diagram illustrating a state midway between open and closed of the display section unit of the vehicle display device according to the first embodiment. The display section unit 20 has a plurality of display sections and a plurality of control sections that control each of the plurality of display sections. As illustrated in FIGS. 2 to 4, the display section unit 20 is capable of opening and closing according to the usage mode.

Usage modes determine which display section is to be used in a state of being made to directly face the driver who is the viewer, among the plurality of display sections which the display section unit 20 includes. The usage modes are associated with vehicle travel modes that include, for example, a vehicle normal travel mode, a high speed travel mode, or a racing mode. In the present embodiment, the vehicle normal travel mode, high speed travel mode, and racing mode are different usage modes. The usage modes are modified as a result of the driver performing an operation to modify the vehicle travel mode. Alternatively, the usage modes may be optionally configured by a user operation.

Returning to FIG. 1, in the present embodiment, the display section unit 20 has two display sections and two control sections that control each of the two display sections. More precisely, the display section unit 20 has a first display section (display section) 21, a control section 22 that controls the first display section 21, a second display section (display section) 23, a control section 24 that controls the second display section 23, and a casing 29 that incorporates the first display section 21, a control section 22, a second display section 23, and a control section 24. In the description hereinbelow, "display section" is used when there is no need to distinguish between the first display section 21 and the second display section 23.

The first display section 21 has a monitor 211 for using video to confirm vehicle state information, and a backlight 212.

The monitor 211 is used in a usage mode which is associated with the normal travel mode of the vehicle. In other words, the monitor 211 is used in a state of being made to directly face the driver during normal travel mode. A state where the monitor 211 is directly facing the driver is called the open state of the display section unit 20. The monitor 211 is disposed on at least part of the perimeter of the casing 29. The monitor 211 is formed having a horizontal rectangular shape. The monitor 211 is a display that includes a liquid crystal display (LCD), or the like, for example. The monitor 211 displays a video as a result of the transmittance of the light of each pixel being controlled by a monitor control section 221 of the control section 22 on the basis of a video signal. In the present embodiment, as illustrated in FIGS. 2 and 4, the monitor 211 displays a video 101 that illustrates velocity information and a video 102 that illustrates engine speed.

The backlight 212 is capable of switching between being lit and unlit. When the backlight 212 is lit, the video displayed on the monitor 211 can then be viewed. When the backlight 212 is unlit, the video displayed on the monitor 211 becomes unviewable. The backlight 212 is switched between being lit and unlit on the basis of a drive signal which is outputted from a backlight control section 222 of the control section 22.

The control section 22 is an arithmetic processing device which is configured from a CPU or the like, for example. The control section 22 has the monitor control section 221 and the backlight control section 222. The monitor control section 221 controls the monitor 211 so as to display a video by controlling the transmittance of the light of each pixel in the monitor 211 on the basis of a video signal which is outputted from a first display control section 431 of the control section 40. The backlight control section 222 generates a drive signal of the backlight 212 on the basis of the control signal outputted from the first display control section 431 of the control section 40 and performs control of the timing for switching between lighting and turning off the backlight 212 and control of the current value flowing to the backlight 212.

The second display section 23 has a monitor 231 for using video to confirm vehicle state information, and a backlight 232.

The monitor 231 is used in a usage mode which is associated with high speed travel mode or racing mode. In other words, the monitor 231 is used in a state of being made to directly face the driver during high speed travel mode or racing mode. A state where the monitor 231 is directly facing the driver is called the closed state of the display section unit 20. The monitor 231 is at least part of the perimeter of the casing 29 and is disposed in a position different from that of the monitor 211. In the present embodiment, the monitor 231 is disposed within a plane that is orthogonal to the monitor 211. The monitor 231 is formed having a horizontal rectangular shape. The monitor 231 is configured such that the surface area of the display surface is narrower than the surface area of the display surface of the monitor 211. The monitor 231 is a display that includes a liquid crystal display or the like, for example. The monitor 231 displays a video as a result of the transmittance of the light of each pixel being controlled by a monitor control section 241 of the control section 24 on the basis of a video signal. In the present embodiment, as illustrated in FIGS. 3 and 4, the monitor 231 displays a video 111 that illustrates velocity information and a video 112 that illustrates engine speed. The video 111 illustrating velocity information which is displayed on the monitor 231 has a smaller display surface area than the video 101 illustrating velocity information which is displayed on the monitor 211. The video 112 illustrating engine speed which is displayed on the monitor 231 has a smaller display surface area than the video 102 illustrating engine speed which is displayed on the monitor 211.

The backlight 232 is capable of switching between being lit and unlit. When the backlight 232 is lit, the video displayed on the monitor 231 can then be viewed. When the backlight 232 is unlit, the video displayed on the monitor 231 becomes unviewable. The backlight 232 is switched between being lit and unlit on the basis of a drive signal which is outputted from a backlight control section 242 of the control section 24.

The control section 24 is an arithmetic processing device which is configured from a CPU or the like, for example. The control section 24 has the monitor control section 241 and the backlight control section 242. The monitor control section 241 controls the monitor 231 so as to display a video by controlling the transmittance of the light of each pixel in the monitor 231 on the basis of a video signal which is outputted from a second display control section 432 of the control section 40. The backlight control section 242 generates a drive signal of the backlight 232 on the basis of the control signal outputted from the second display control section 432 of the control section 40 and performs control of the timing for switching between lighting and turning off the backlight 232 and control of the current value flowing to the backlight 232.

The casing 29 is formed having a box shape in which the positions where at least the first display section 21 and second display section 23 are arranged are open. Arranged inside the casing 29 are the control section 22 and the control section 24. The outline of the display section unit 20 is defined by the casing 29, the first display section 21, and the second display section 23.

The open/close driving mechanism 30 is a driving mechanism for opening/closing the display section unit 20. The open/close driving mechanism 30 opens/closes the display section unit 20 by turning the casing 29 about an axis that is parallel to the Y axis direction. When the display section unit 20 is placed in an open state, the open/close driving mechanism 30 causes the monitor 211 to directly face the driver as illustrated in FIG. 2 by turning the front section of the casing 29 from the state illustrated in FIG. 3 so that same is placed in an upstanding position upward and to the rear as illustrated in FIG. 4. When the display section unit 20 is placed in a closed state, the open/close driving mechanism 30 causes the monitor 231 to directly face the driver as illustrated in FIG. 3 by turning the top of the casing 29 from the state illustrated in FIG. 2 so that same is tilted downward to the front as illustrated in FIG. 4. The driving and driving stoppage by the open/close driving mechanism 30 is controlled on the basis of a control signal which is outputted from a driving mechanism control section 41 of the control section 40.

The control section 40 controls the display section unit 20 and the open/close driving mechanism 30 to open and close the display section unit 20 and cause the display section unit 20 to display video, according to the usage mode. The control section 40 is an arithmetic processing device which is configured from a CPU or the like, for example. The control section 40 has the driving mechanism control section 41, a vehicle information acquisition section 42, and a display control section 43. The control section 40 loads a program, which is stored in a storage section (not illustrated), into memory and executes instructions that are contained in a program. The control section 40 includes an internal memory (not illustrated), and the internal memory is used for temporary storage, or the like, of the data in the control section 40.

The driving mechanism control section 41 controls the open/close driving mechanism 30 to perform an operation to switch the display section facing the viewer according to usage mode information. The driving mechanism control section 41 acquires the usage mode information from the vehicle.

The usage mode information is generated by the vehicle when the driver performs an operation to modify the vehicle travel mode. Alternatively, the usage mode information is generated by the vehicle when the user performs an operation to modify the usage mode. The usage mode information generated by the vehicle is acquired via a controller area network (CAN) or the engine control unit (ECU) when the usage mode has changed.

The vehicle information acquisition section 42 acquires vehicle information enabling vehicle state information, for at least one of the vehicle velocity and the engine speed, to be calculated and calculates the vehicle state information. The vehicle information acquisition section 42 acquires the vehicle information from the CAN, ECU, or various sensors that sense vehicle states, or the like. The vehicle information acquisition section 42 outputs the calculated vehicle state information to the display control section 43.

The display control section 43 causes the plurality of display sections to each generate and display video that contains the vehicle state information calculated by the vehicle information acquisition section 42. When control to switch the display section facing the viewer is executed by the driving mechanism control section 41, the display control section 43 causes the plurality of display sections to each generate and display, according to the usage mode, a video having a respectively adjusted frame rate. In the present embodiment, the display control section 43 configures the frame rate of the video displayed on the display section which is disposed in a position facing the viewer to be higher than the frame rate of the video displayed on the other display section. The display control section 43 has a plurality of display control sections that control the plurality of display sections. In the present embodiment, the display control section 43 has the first display control section 431, which controls the first display section 21, and the second display control section 432, which controls the second display section 23.

The first display control section 431 generates video which is displayed on the first display section 21 and causes the first display section 21 to display the video. On the basis of vehicle state information calculated by the vehicle information acquisition section 42, the first display control section 431 generates a video 101 illustrating velocity information and a video 102 illustrating engine speed as videos which are displayed on the first display section 21 and causes the first display section 21 to display the videos. The video 101 illustrating velocity information is a video that displays numerical values of velocity. The video 102 illustrating engine speed is a video that displays engine speed in a tachometer format.

The first display control section 431 generates video which is displayed on the first display section 21 at a frame rate that is configured for each usage mode. More precisely, in a usage mode which is associated with normal travel mode, the first display control section 431 generates video by performing adjustment so that the frame rate of the video which is displayed on the first display section 21 is higher than the frame rate of the video which is displayed on the second display section 23. In a usage mode which is associated with high speed travel mode or racing mode, the first display control section 431 generates video by performing adjustment so that the frame rate of the video which is displayed on the first display section 21 is lower than the frame rate of the video which is displayed on the second display section 23. While the usage mode is being modified, in other words, when the display section unit 20 is in a state midway between open and closed, the first display control section 431 generates video by performing adjustment so that the frame rate of the video which is displayed on the first display section 21 is an intermediate frame rate that is higher than the frame rate of a video in a usage mode which is associated with high speed travel mode or racing mode and lower than the frame rate of a video in a usage mode which is associated with normal travel mode. The first display control section 431 then outputs a video signal of the generated video to the monitor control section 221 of the control section 22.

The first display control section 431 outputs, to the backlight control section 222 of the control section 22, a control signal that switches between the backlight 212 being lit and unlit according to the open/closed state of the display section unit 20. More precisely, the first display control section 431 outputs a control signal that lights the backlight 212 to the backlight control section 222 of the control section 22 when the display section unit 20 is in an open state or a state midway between open and closed. The first display control section 431 outputs a control signal that turns off the backlight 212 to the backlight control section 222 of the control section 22 when the display section unit 20 is in a closed state.

The second display control section 432 generates video which is displayed on the second display section 23 and causes the second display section 23 to display the video. On the basis of vehicle state information calculated by the vehicle information acquisition section 42, the second display control section 432 generates a video 111 illustrating velocity information and a video 112 illustrating engine speed as videos which are displayed on the second display section 23 and causes the second display section 23 to display the videos.

The second display control section 432 generates video which is displayed on the second display section 23 at a frame rate that is configured for each usage mode. More precisely, in a usage mode which is associated with high speed travel mode or racing mode, the second display control section 432 generates video by performing adjustment so that the frame rate of the video which is displayed on the second display section 23 is higher than the frame rate of the video which is displayed on the first display section 21. In a usage mode that is associated with normal travel mode, the second display control section 432 generates video by performing adjustment so that the frame rate of the video which is displayed on the second display section 23 is lower than the frame rate of the video which is displayed on the first display section 21. While the usage mode is being modified, in other words, when the display section unit 20 is in a state midway between open and closed, the second display control section 432 generates video by performing adjustment so that the frame rate of the video which is displayed on the second display section 23 is an intermediate frame rate that is higher than the frame rate of a video in a usage mode which is associated with normal travel mode and lower than the frame rate of a video in a usage mode which is associated with high speed travel mode or racing mode. In the present embodiment, while the usage mode is being modified, the frame rate of the video displayed on the second display section 23 is assumed to be the same as the frame rate of the video displayed on the first display section 21. The second display control section 432 then outputs a video signal of the generated video to the monitor control section 241 of the control section 22.

The second display control section 432 outputs, to the backlight control section 242 of the control section 22, a control signal that switches between the backlight 232 being lit and unlit according to the open/closed state of the display section unit 20. More precisely, the second display control section 432 outputs a control signal that lights the backlight 232 to the backlight control section 242 of the control section 24 when the display section unit 20 is in a closed state or a state midway between open and closed. The second display control section 432 outputs a control signal that turns off the backlight 232 to the backlight control section 242 of the control section 24 when the display section unit 20 is in an open state.

The frame rate that is configured for each usage mode will be described using FIG. 5. FIG. 5 is a diagram illustrating an example of frame rates of a first display section and a second display section in each of the open/closed states of the display section unit. While the display section unit 20 is in an open state, in other words, while the display section unit 20 is open, the frame rate of the video which is displayed on the first display section 21 is configured as 60 (fps) and the frame rate of the video which is displayed on the second display section 23 is configured as 10 (fps). While the display section unit 20 is in a closed state, in other words, while the display section unit 20 is closed, the frame rate of the video which is displayed on the first display section 21 is configured as 10 (fps) and the frame rate of the video which is displayed on the second display section 23 is configured as 60 (fps). While the display section unit 20 is in a state midway between open and closed, in other words, while the display section unit 20 is between open and closed, the frame rate of the video which is displayed on the first display section 21 is configured as 40 (fps) and the frame rate of the video which is displayed on the second display section 23 is configured as 40 (fps).

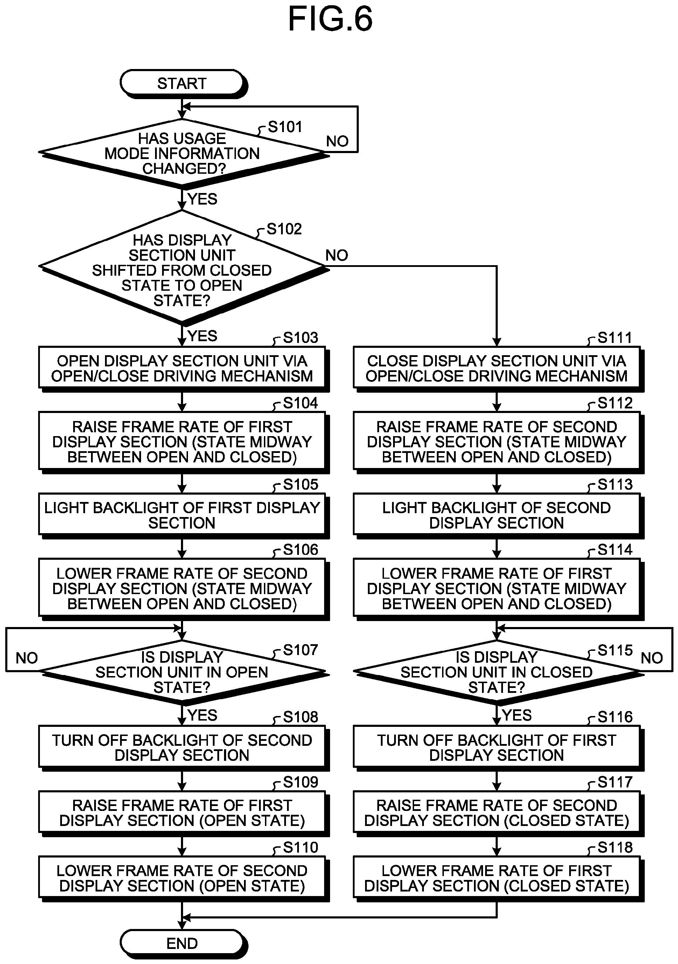

The flow of the processing in the control section 40 will be described next using FIG. 6. FIG. 6 is a flowchart illustrating an example of processing of a vehicle display device according to the first embodiment.

Assuming the processing illustrated in FIG. 6, the driving mechanism control section 41 acquires usage mode information while the vehicle display device 1 is starting up. While the vehicle display device 1 is starting up, the vehicle information acquisition section 42 acquires vehicle information and calculates vehicle state information.

The control section 40 determines whether the usage mode information has changed (step S101). In cases where the usage mode information acquired by the driving mechanism control section 41 has changed from the most recently acquired usage mode information (Yes in step S101), the control section 40 advances to step S102. In cases where the usage mode information acquired by the driving mechanism control section 41 is the same as the most recently acquired usage mode information (No in step S101), the control section 40 re-executes the processing of step S101.

The control section 40 determines whether the display section unit 20 is in a closed state or an open state (step S102). In cases where, on the basis of the usage mode information, there is a change from the usage mode associated with high speed travel mode or racing mode to the usage mode associated with normal travel mode, the control section 40 determines that the display section unit 20 has shifted from a closed state to an open state (Yes in step S102) and advances to step S103. In cases where, on the basis of the usage mode information, there is a change from the usage mode associated with normal travel mode to the usage mode associated with high speed travel mode or racing mode, the control section 40 determines that the display section unit 20 has not shifted from a closed state to an open state (No in step S102) and advances to step S111. When a No determination is made in step S102, the display section unit 20 is shifted from an open state to a closed state.

The control section 40 uses the driving mechanism control section 41 to open the display section unit 20 via the open/close driving mechanism 30 (step S103). The control section 40 advances to step S104.

The control section 40 uses the first display control section 431 to configure the frame rate of the video which is displayed on the first display section 21 as an intermediate frame rate that is higher than the current frame rate (step S104). More precisely, the control section 40 uses the first display control section 431 to generate and display video that is obtained by adjusting the frame rate of the video displayed on the first display section 21 to a frame rate of a state midway between open and closed. In the present embodiment, the frame rate of the video which is displayed on the first display section 21 is configured as 40. The control section 40 advances to step S105.

The control section 40 uses the first display control section 431 to light the backlight 212 of the first display section 21 (step S105). Thus, when the display section unit 20 is in a state midway between open and closed, the backlight 212 of the first display section 21 and the backlight 232 of the second display section 23 are lit. The control section 40 advances to step S106.

The control section 40 uses the second display control section 432 to configure the frame rate of the video which is displayed on the second display section 23 as an intermediate frame rate that is lower than the current frame rate (step S106). More precisely, the control section 40 uses the second display control section 432 to generate and display video that is obtained by adjusting the frame rate of the video displayed on the second display section 23 to a frame rate of a state midway between open and closed. In the present embodiment, the frame rate of the video which is displayed on the second display section 23 is configured as 40. The control section 40 advances to step S107.

The control section 40 determines whether the display section unit 20 is in an open state (step S107). More precisely, in cases where the display section unit 20 has assumed an open state (Yes in step S107), the control section 40 advances to step S108. In cases where the display section unit 20 has not assumed an open state (No in step S107), the control section 40 re-executes the processing of step S107. In cases where the display section unit 20 has not assumed an open state, the display section unit 20 is in a state midway between open and closed.

The control section 40 uses the second display control section 432 to turn off the backlight 232 of the second display section 23 (step S108). Thus, when the display section unit 20 is in an open state, only the backlight 212 of the first display section 21 is lit. The control section 40 advances to step S109.

The control section 40 uses the first display control section 431 to raise the frame rate of the video which is displayed on the first display section 21 (step S109). More precisely, the control section 40 uses the first display control section 431 to generate and display video by performing adjustment so that the frame rate of the video which is displayed on the first display section 21 is higher than the frame rate of the video which is displayed on the second display section 23. The control section 40 uses the first display control section 431 to generate and display video that is obtained by adjusting the frame rate of the video displayed on the first display section 21 to a frame rate of an open state. In the present embodiment, the frame rate of the video which is displayed on the first display section 21 is configured as 60. The control section 40 advances to step S110.

The control section 40 uses the second display control section 432 to lower the frame rate of the video which is displayed on the second display section 23 (step S110). More precisely, the control section 40 uses the second display control section 432 to generate and display video that is obtained by performing adjustment so that the frame rate of the video which is displayed on the second display section 23 is lower than the frame rate of the video which is displayed on the first display section 21. The control section 40 uses the second display control section 432 to generate and display video that is obtained by adjusting the frame rate of the video displayed on the second display section 23 to a frame rate of an open state. In the present embodiment, the frame rate of the video which is displayed on the second display section 23 is configured as 10. The control section 40 ends the processing.

When, on the other hand, a No determination is made in step S102, the control section 40 uses the driving mechanism control section 41 to close the display section unit 20 via the open/close driving mechanism 30 (step S111). The control section 40 advances to step S112.

The control section 40 uses the second display control section 432 to configure the frame rate of the video which is displayed on the second display section 23 as an intermediate frame rate that is higher than the current frame rate (step S112). More precisely, the control section 40 uses the second display control section 432 to generate and display video that is obtained by adjusting the frame rate of the video displayed on the second display section 23 to a frame rate of a state midway between open and closed. In the present embodiment, the frame rate of the video which is displayed on the second display section 23 is configured as 40. The control section 40 advances to step S113.

The control section 40 uses the second display control section 432 to light the backlight 232 of the second display section 23 (step S113). Thus, when the display section unit 20 is in a state midway between open and closed, the backlight 212 of the first display section 21 and the backlight 232 of the second display section 23 are lit. The control section 40 advances to step S114.

The control section 40 uses the first display control section 431 to configure the frame rate of the video which is displayed on the first display section 21 as an intermediate frame rate that is lower than the current frame rate (step S114). More precisely, the control section 40 uses the first display control section 431 to generate and display video that is obtained by adjusting the frame rate of the video displayed on the first display section 21 to a frame rate of a state midway between open and closed. In the present embodiment, the frame rate of the video which is displayed on the first display section 21 is configured as 40. The control section 40 advances to step S115.

The control section 40 determines whether the display section unit 20 is in a closed state (step S115). More precisely, in cases where the display section unit 20 has assumed a closed state (Yes in step S115), the control section 40 advances to step S116. In cases where the display section unit 20 has not assumed a closed state (No in step S115), the control section 40 re-executes the processing of step S115. In cases where the display section unit 20 has not assumed a closed state, the display section unit 20 is in a state midway between open and closed.

The control section 40 uses the first display control section 431 to turn off the backlight 212 of the first display section 21 (step S116). Thus, when the display section unit 20 is in a closed state, only the backlight 232 of the second display section 23 is lit. The control section 40 advances to step S117.

The control section 40 uses the second display control section 432 to raise the frame rate of the video which is displayed on the second display section 23 (step S117). More precisely, the control section 40 uses the second display control section 432 to generate and display video that is obtained by performing adjustment so that the frame rate of the video which is displayed on the second display section 23 is higher than the frame rate of the video which is displayed on the first display section 21. The control section 40 uses the second display control section 432 to generate and display video that is obtained by adjusting the frame rate of the video displayed on the second display section 23 to a frame rate of a closed state. In the present embodiment, the frame rate of the video which is displayed on the second display section 23 is configured as 60. The control section 40 advances to step S118.

The control section 40 uses the first display control section 431 to lower the frame rate of the video which is displayed on the first display section 21 (step S118). More precisely, the control section 40 uses the first display control section 431 to generate and display video that is obtained by performing adjustment so that the frame rate of the video which is displayed on the first display section 21 is lower than the frame rate of the video which is displayed on the second display section 23. The control section 40 uses the first display control section 431 to generate and display video that is obtained by adjusting the frame rate of the video displayed on the first display section 21 to a frame rate of a closed state. In the present embodiment, the frame rate of the video which is displayed on the first display section 21 is configured as 10. The control section 40 ends the processing.

Thus, when the display section unit 20 is in a usage mode associated with normal travel mode, the control section 40 raises the frame rate of the video which is displayed on the first display section 21 and lowers the frame rate of the video which is displayed on the second display section 23. Furthermore, during a usage mode which is associated with high speed travel mode or racing mode, the control section 40 raises the frame rate of the video which is displayed on the second display section 23 and lowers the frame rate of the video which is displayed on the first display section 21. Furthermore, while the display section unit 20 is in a state midway between open and closed, the control section 40 configures the frame rate of the video which is displayed on the first display section 21 and the frame rate of the video which is displayed on the second display section 23 as intermediate frame rates.

As described hereinabove, according to the present embodiment, when the display section unit 20 is in a usage mode which is associated with normal travel mode, a video having a high frame rate can be displayed on the first display section 21 facing the driver and a video having a low frame rate can be displayed on the upward second display section 23 which does not face the driver. Furthermore, according to the present embodiment, during a usage mode which is associated with high speed travel mode or racing mode, a video having a high frame rate can be displayed on the second display section 23 facing the driver and a video having a low frame rate can be displayed on the downward first display section 21 which does not face the driver. In addition, according to the present embodiment, when the display section unit 20 is in a state midway between open and closed, a video having an intermediate frame rate can be displayed on the first display section 21 and second display section 23.

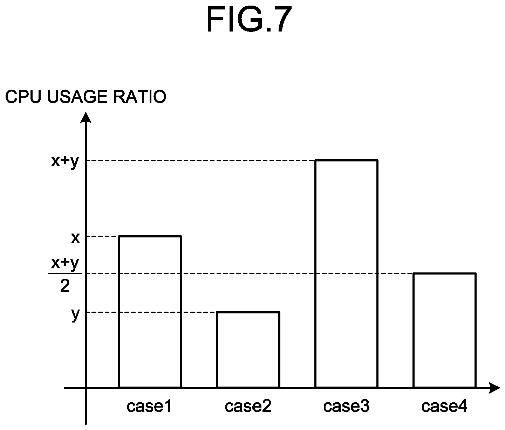

CPU usage ratios will now be described using FIG. 7. FIG. 7 is a diagram illustrating an example of CPU usage ratios. In case 1, the display section unit 20 illustrated in FIG. 2 is in an open state, and the CPU usage ratio of the first display control section 431 is x. In case 2, the display section unit 20 illustrated in FIG. 3 is in a closed state, and the CPU usage ratio of the second display control section 432 is y. Case 3 is a comparative example and illustrates a CPU usage ratio in a case where the CPU usage ratios of the first display control section 431 and second display control section 432 are not suppressed, when the display section unit 20 illustrated in FIG. 4 is in a state midway between open and closed. In case 3, the CPU usage ratios for case 1 and case 2 are totaled without further processing, and the CPU usage ratio is (x+y). Case 4 illustrates a CPU usage ratio in a case where the frame rates of the videos which are displayed on the first display section 21 and second display section 23 are each reduced to 1/2, when the display section unit 20 illustrated in FIG. 4 is in a state midway between open and closed. In case 4, the CPU usage ratios for case 1 and case 2 are each halved and totaled, and the CPU usage ratio is (x+y)/2. Thus, by lowering the frame rates of the videos which are displayed on the first display section 21 and second display section 23, the CPU usage ratio of the control section 40 can be reduced.

Accordingly, according to the present embodiment, the CPU usage ratio of the control section 40 can be reduced without impairing the visibility of the display sections. According to the present embodiment, because the burden on the CPU is relieved, a display can be implemented by stably executing processing to calculate vehicle state information.

According to the present embodiment, it is possible to raise the frame rate of a video which is displayed on a display section facing the driver, in other words, which the driver is viewing, and it is possible to lower the frame rate of a video displayed on a display section which is not facing the driver, in other words, in a position which is difficult for the driver to view. Furthermore, according to the present embodiment, while in a state midway between open and closed, the display section unit 20 configures the frame rate of a video which is displayed on the display section as an intermediate frame rate. Because the display section unit 20 is moving when the display section unit 20 is in a state midway between open and closed, the driver does not readily feel discomfort even when a video at a low frame rate is displayed. Accordingly, the present embodiment enables the frame rate to be reduced without causing the driver discomfort upon viewing a display section.

Thus, according to the present embodiment, the burden on the CPU can be relieved without adding processors. The present embodiment makes it possible, by relieving the burden on the CPU, to stabilize the display and further increase the safety of a moving body. Moreover, according to the present embodiment, because the number of processors need not be increased, cost increases can be suppressed.

### [Second Embodiment]

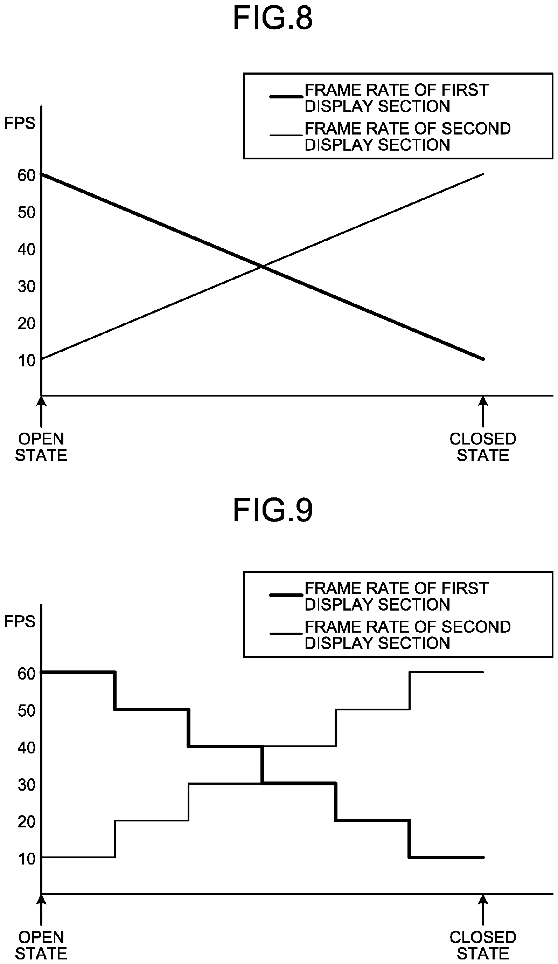

A vehicle display device 1 according to the present embodiment will now be described with reference to FIGS. 8 and 9. FIG. 8 is a diagram illustrating an example of frame rates of a first display section and a second display section according to a second embodiment. FIG. 9 is a diagram illustrating another example of frame rates of the first display section and the second display section according to the second embodiment. The basic configuration of the vehicle display device 1 is the same as the vehicle display device 1 according to the first embodiment. In the description hereinbelow, the same reference signs or corresponding reference signs are assigned to the same constituent elements as vehicle display device 1, and a detailed description thereof is omitted.

When control to switch the display section facing the viewer is executed by the driving mechanism control section 41, in other words, when the display section unit 20 is moved, the display control section 43 changes the frame rate of the video displayed on the display section in response to the change in position of the display section. Upon opening and closing the display section unit 20, the display control section 43 changes the frame rate of the video displayed on the display section unit 20 in response to the open/closed state of the display section unit 20. When the display section unit 20 is open/closed, the visibility from the standpoint of the driver changes according to the angle of the display surface of the monitor 211 with respect to the Z axis direction. Therefore, as the angle increasingly becomes an angle facilitating viewing by the driver, the display control section 43 raises the frame rate of the display section facing the driver upon completion of the open/close operation. Furthermore, as the angle increasingly becomes an angle rendering viewing by the driver difficult, the display control section 43 lowers the frame rate of the display section not facing the driver upon completion of the open/close operation. The display control section 43 may change the frame rate in a linear manner as illustrated in FIG. 8 or may change the frame rate in steps as illustrated in FIG. 9, for example.

When the display section unit 20 is shifted from a closed state to an open state, in other words, from a usage mode which is associated with high speed travel mode or racing mode to a usage mode which is associated with normal travel mode, the first display control section 431 generates and displays video while raising the frame rate of the video which is displayed on the first display section 21 in a linear manner as illustrated in FIG. 8 or in steps as illustrated in FIG. 9, according to the angle of the display surface of the monitor 211 with respect to the Z axis direction. When the display section unit 20 is shifted from an open state to a closed state, in other words, from a usage mode which is associated with normal travel mode to a usage mode which is associated with high speed travel mode or racing mode, the first display control section 431 generates and displays video while lowering the frame rate of the video which is displayed on the first display section 21 in a linear manner as illustrated in FIG. 8 or in steps as illustrated in FIG. 9, according to the angle of the display surface of the monitor 211 with respect to the Z axis direction.

When the display section unit 20 is shifted from a closed state to an open state, the second display control section 432 generates and displays video while lowering the frame rate of the video which is displayed on the second display section 23 in a linear manner as illustrated in FIG. 8 or in steps as illustrated in FIG. 9 according to the angle of the display surface of the monitor 211 with respect to the Z axis direction. When the display section unit 20 is shifted from an open state to a closed state, the second display control section 432 generates and displays video while raising the frame rate of the video which is displayed on the second display section 23 in a linear manner as illustrated in FIG. 8 or in steps as illustrated in FIG. 9 according to the angle of the display surface of the monitor 211 with respect to the Z axis direction.

As described hereinabove, according to the present embodiment, when the display section unit 20 is opened or closed, it is possible to generate and display video while adjusting the frame rate of the video which is displayed on the first display section 21 and the frame rate of the video which is displayed on the second display section 23 according to the angle of the display surface of the monitor 211 with respect to the Z axis direction. According to the present embodiment, the CPU usage ratio of the control section 40 can be reduced without impairing the visibility of the display section facing the driver.

### [Third Embodiment]

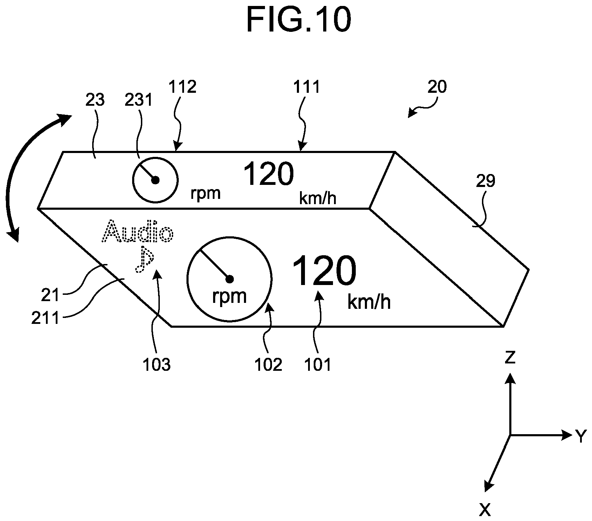

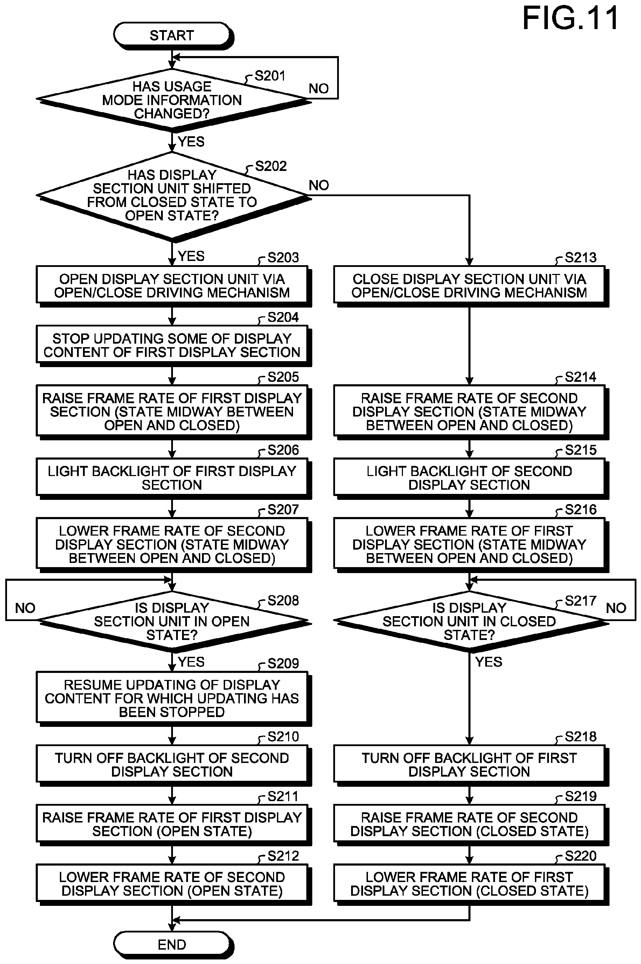

A vehicle display device 1 according to the present embodiment will now be described with reference to FIGS. 10 and 11. FIG. 10 is a schematic diagram illustrating a state midway between open and closed of the display section unit of the vehicle display device according to a third embodiment. FIG. 11 is a flowchart illustrating an example of processing of a vehicle display device according to the third embodiment. The basic configuration of the vehicle display device 1 is the same as the vehicle display device 1 according to the first embodiment.

As illustrated in FIG. 10, when the display section unit 20 is in an open state or a closed state, the monitor 211 displays a video 101 illustrating velocity information, a video 102 illustrating engine speed, and a video 103 illustrating audio information. When the display section unit 20 is in a state midway between open and closed, the monitor 211 displays the video 101 illustrating velocity information and the video 102 illustrating engine speed and stops updating the video 103 illustrating audio information. When the updating of each video displayed on the monitor 211 is stopped, the backlight 212 corresponding to the area where the videos are displayed is preferably turned off in order to relieve the discomfort by making the videos unviewable to the viewer. Each video displayed on the monitor 211 is called display content.

When the display section facing the viewer is not being switched by the driving mechanism control section 41, in other words, when the display section unit 20 is in an open state or a closed state, the display control section 43 displays a video including vehicle state information and additional information other than the vehicle state information. When control to switch the display section facing the viewer is executed by the driving mechanism control section 41, the display control section 43 displays the video including vehicle state information. In other words, when the display section facing the viewer is being switched by the driving mechanism control section 41, in other words, when the display section unit 20 is moving toward to the viewer, the display control section 43 stops updating the video including additional information other than the vehicle state information.

When the display section unit 20 is in an open state or a closed state, the first display control section 431 displays, on the first display section 21, the video 101 illustrating velocity information, the video 102 illustrating engine speed, and the video 103 illustrating audio information. When the display section unit 20 is in an open state, the first display control section 431 lights at least the backlight 212 corresponding to the area where the video 101 illustrating velocity information, the video 102 illustrating engine speed, and the video 103 illustrating audio information are displayed. When the display section unit 20 is in a closed state, the first display control section 431 turns off the backlight 212.

While the display section unit 20 is moving with respect to the viewer, the first display control section 431 displays, on the first display section 21, the video 101 illustrating velocity information and the video 102 illustrating engine speed. While the display section unit 20 is moving with respect to the viewer, the first display control section 431 stops updating the video 103 illustrating audio information. Furthermore, while the display section unit 20 is moving with respect to the viewer, the first display control section 431 turns off the backlight 212 corresponding to the area where the video 103 illustrating audio information is displayed. While the display section unit 20 is moving with respect to the viewer, the first display control section 431 lights at least the backlight 212 corresponding to the area where the video 101 illustrating velocity information and the video 102 illustrating engine speed are displayed.

The flow of the processing in the control section 40 will be described next using FIG. 11. The processing of steps S201 to S203, steps S205 to S208, and steps S210 to S220 performs the same processing as steps S101 to S103, steps S104 to S107, and steps S108 to S118 of the flowchart illustrated in FIG. 6.

The control section 40 stops updating part of the display content of the first display section 21 (step S204). In the present embodiment, the control section 40 uses the first display control section 431 to display, on the first display section 21, the video 101 illustrating velocity information and the video 102 illustrating engine speed. The control section 40 uses the first display control section 431 to update and stop the video 103 illustrating audio information. The control section 40 uses the first display control section 431 to turn off the backlight 212 corresponding to the area where the video 103 illustrating audio information is displayed. The control section 40 uses the first display control section 431 to light at least the backlight 212 corresponding to the area where the video 101 illustrating velocity information and the video 102 illustrating engine speed are displayed.

The control section 40 resumes updating of the display content for which updating had been stopped of the first display section 21 (step S209). In the present embodiment, the control section 40 uses the first display control section 431 to display, on the first display section 21, the video 101 illustrating velocity information, the video 102 illustrating engine speed, and the video 103 illustrating audio information. The control section 40 uses the first display control section 431 to light at least the backlight 212 corresponding to the area where the video 101 illustrating velocity information, the video 102 illustrating engine speed, and the video 103 illustrating audio information are displayed.

As described hereinabove, according to the present embodiment, while the display section unit 20 is moving, the updating of the video including additional information other than the vehicle state information is stopped. The present embodiment enables the burden on the CPU to be relieved because the updating of some of the display content is stopped while the display section unit 20 is moving. Furthermore, by turning off the backlight 212 corresponding to the area where the display content for which updating has been stopped is displayed, discomfort to the viewer can be alleviated.

When updating is resumed after stopping the updating of some of the display content of the first display section 21, the rise time until an updated video is displayed may be configured as follows in order to alleviate discomfort to the viewer. For example, in cases where the display content for which updating has been stopped is the video 103 illustrating audio information, the video 103 may be updated while remaining in an unviewable state when the audio information contained in the video 103 is updated in the event of a song change or volume level change while updating is stopped. Thus, by updating the video 103 to the latest information even when the video is in an unviewable state, the discomfort to the viewer can be alleviated even though a rise time is required when updating is resumed.

Although the vehicle display device 1 according to the present invention has been described thus far, the present invention may be carried out using a variety of different embodiments other than the foregoing embodiments.

The illustrated constituent elements of the vehicle display device 1 are each functionally conceptual and need not necessarily be physically configured as illustrated. In other words, the concrete forms of each of the devices are not limited to or by those illustrated, and all or part thereof may be functionally or physically broken up or integrated in optional units according to the processing burden or usage status, or the like, of each device.

The configuration of the vehicle display device 1 is implemented by a program or the like which is loaded into memory as software, for example. In the foregoing embodiments, the vehicle display device 1 has been described as functional blocks that are implemented by way of cooperation between such hardware or software. In other words, these functional blocks can be implemented in various forms using only hardware, only software, or a combination thereof.

Although cases where there are two display sections have been described hereinabove, the number of display sections is not limited to two. The same applies even when there are three or more display sections.

The foregoing constituent elements include constituent elements that could easily be conceived by a person skilled in the art or which are substantially the same. Furthermore, the foregoing configurations can be suitably combined. Moreover, various omissions, substitutions or modifications can be made to the configuration without departing from the spirit of the present invention.

### Reference Signs List

- 1: VEHICLE DISPLAY DEVICE
- 20: DISPLAY SECTION UNIT
- 21: FIRST DISPLAY SECTION (DISPLAY SECTION)
- 22: CONTROL SECTION
- 23: SECOND DISPLAY SECTION (DISPLAY SECTION)
- 24: CONTROL SECTION
- 30: OPEN/CLOSE DRIVING MECHANISM (DRIVING MECHANISM)
- 40: CONTROL SECTION (DISPLAY CONTROL DEVICE)
- 41: DRIVING MECHANISM CONTROL SECTION
- 42: VEHICLE INFORMATION ACQUISITION SECTION
- 43: DISPLAY CONTROL SECTION
- 431: FIRST DISPLAY CONTROL SECTION
- 432: SECOND DISPLAY CONTROL SECTION

## Claims

1. A display control device, comprising:
a vehicle information acquisition section that acquires vehicle-related information;
a display control section that implements control to generate and display, on a plurality of display sections respectively, a video that includes the information acquired by the vehicle information acquisition section; and
a driving mechanism control section that controls a driving mechanism that moves the plurality of display sections with respect to a viewer,
wherein, when the driving mechanism control section executes control to move the display sections with respect to the viewer, the display control section generates and displays video that is obtained by adjusting a frame rate for the plurality of display sections respectively.

2. The display control device according to claim 1,
wherein the display control section configures the frame rate of the video displayed on the display section which is disposed in a position facing the viewer to be higher than the frame rate of the video displayed on the other display section.

3. The display control device according to claim 1 or 2,
wherein, when the driving mechanism control section executes control to move the display section with respect to the viewer, the display control section changes the frame rate of the video in response to the change in position of the display section.

4. The display control device according to any one of claims 1 to 3,
wherein, when the driving mechanism control section is not switching the display section facing the viewer, the display control section displays a video which includes the information and additional information other than the information, and when the driving mechanism control section is switching the display section facing the viewer, the display control section displays the video which includes the information.

5. A vehicle display device, comprising:
the display control device according to any one of claims 1 to 4; and
at least one of the plurality of display sections and the driving mechanism.

6. A display control method, comprising:
a vehicle information acquisition step of acquiring vehicle-related information;
a display control step of implementing control to generate and display, on a plurality of display sections respectively, a video that includes the information acquired by the vehicle information acquisition step; and
a driving mechanism control step of controlling a driving mechanism that moves the plurality of display sections with respect to a viewer,
wherein, when control to move the display sections with respect to the viewer is executed by the driving mechanism control step, the display control step generates and displays video that is obtained by adjusting a frame rate for the plurality of display sections respectively.

7. A program for causing a computer operating as a display control device to execute:
a vehicle information acquisition step of acquiring vehicle-related information;
a display control step of implementing control to generate and display, on a plurality of display sections respectively, a video that includes the information acquired by the vehicle information acquisition step; and
a driving mechanism control step of controlling a driving mechanism that moves the plurality of display sections with respect to a viewer,
wherein, when control to move the display sections with respect to the viewer is executed by the driving mechanism control step, the display control step generates and displays video that is obtained by adjusting a frame rate for the plurality of display sections respectively.
